# EUROPÄISCHE PATENTANMELDUNG

(11) **EP 0 734 779 A2**
(43) Veröffentlichungstag der Anmeldung: **02.10.1996**
(21) Anmeldenummer: 96100942.0
(22) Anmeldetag: 24.01.1996
(51) Int. Cl.: B05B 5/10

(54) **Elektrostatische Sprühbeschichtungseinrichtung**

(30) Priorität: 27.03.1995 DE 19511254
(71) Anmelder: Gema Volstatic AG, CH-9015 St. Gallen (CH)
(72) Erfinder: Mauchle, Felix, CH-9030 Abtwil (CH)
(74) Vertreter: Vetter, Ewald Otto, Dipl.-Ing.

(57) **Zusammenfassung**

Elektrostatische Sprühbeschichtungseinrichtung mit einem Hochspannungserzeuger (10) und einer Meßwiderstandsschaltung (50) zur Messung des Ist-Wertes der Hochspannung an einer Hochspannungselektrode (6, 8) oder einer dazu direkt proportionalen Spannung und Verwertung dieses Ist-Wertes zur Anzeige (64, 66) der tatsächlichen Elektrodenspannung, zur Regelung (20) der Elektrodenspannung und zur Anzeige (72, 76), wenn der Hochspannungserzeuger außerhalb einer vorbestimmten Leistungsgrenze arbeitet.

## Beschreibung

Die Erfindung betrifft eine elektrostatische Sprühbeschichtungseinrichtung gemäß Anspruch 1.

Eine elektrostatische Pulver-Sprühbeschichtungseinrichtung ist aus der deutschen Patentschrift DE-C 34 02 945 bekannt Sie weist eine Sprühvorrichtung in Form einer Sprühpistole, die an ihrem stromabwärtigen Ende, an welchem sie Beschichtungspulver versprüht, mehrere Hochspannungselektroden zur elektrostatischen Aufladung des Beschichtungspulvers aufweist. Die Sprühpistole enthält einen Transformator und eine an seine Sekundärseite angeschlossene Spannungsvervielfachschaltung gemäß "Greinacher" in Form einer sogenannten Kaskadenschaltung, welche im wesentlichen aus elektrischen Gleichrichtern und Kondensatoren besteht. Am rückwärtigen Ende der Sprühpistole befindet sich eine Leuchtdiode, welche an die Primärseite des Transformators angeschlossen ist und ab einer bestimmten Mindestspannung leuchtet. Hierbei wird nicht die Primärspannung des Transformators gemessen, sondern nur angezeigt, wenn die Primärspannung einen bestimmten Mindestwert hat, der ausreicht, um die Leuchtdiode zum Leuchten zu bringen.

Das Ziel vorliegender Patentanmeldung ist jedoch ein ganz anderes. Mit vorliegender Patentanmeldung soll die Hochspannung gemessen werden, welche während Sprühbeschichtungsvorgängen an der Hochspannungselektrode vorhanden ist. Für die Qualität einer beschichteten Oberfläche und für die pro Zeiteinheit aufgesprühte Pulvermenge ist die Kenntnis des Ist-Wertes der Hochspannung an der Hochspannungselektrode wichtig. Wenn die Bedienungsperson weiß, bei welcher Spannung sie eine bestimmte Beschichtungsdicke erzeugen kann und/oder eine bestimmte Beschichtungsqualität erzeugen kann, dann braucht sie zur Erzielung dieser Eigenschaften lediglich den dafür erforderlichen Ist-Wert der Elektrodenhochspannung einzustellen. Der Ist-Wert der Elektrodenhochspannung ändert sich in Abhängigkeit vom elektrischen Widerstand des Stromweges von der Hochspannungselektrode durch die Luft zu dem zu beschichtenden Gegenstand und dann vom zu beschichtenden Gegenstand über seine Transportvorrichtung oder Tragevorrichtung zum Erdpotential und dann zurück vom Erdpotential zur Spannungsquelle, an welche der Hochspannungserzeuger angeschlossen ist. Die Größe dieses elektrischen Widerstandes ist unter anderem vom Abstand des zu beschichtenden Gegenstandes von der Hochspannungselektrode, von der Materialart und Größe des zu beschichtenden Gegenstandes abhängig und verändert sich während des Beschichtungsvorganges in Abhängigkeit von der auf den Gegenstand aufgetragenen Beschichtungsdicke. Der Abstand des Gegenstandes von der Hochspannungselektrode kann vorbestimmt werden. Die anderen Widerstände des genannten Stromweges sind im wesentlichen unveränderlich. Dadurch kann die Bedienungsperson für einen vorbestimmten Abstand des zu beschichtenden Gegenstandes von der Elektrode die vorher durch Versuche ermittelte günstigste Elektrodenhochspannung einstellen. Durch die genannten Veränderung des elektrischen Widerstandes während des Beschichtungsvorganges verändert sich nicht nur die Höhe des elektrischen Stromes, sondern in Abhängigkeit von diesem Strom auch der Spannungsabfall im Hochspannungserzeuger und in einem gegebenenfalls zwischen ihm und der Elektrode angeordneten Strombegrenzungswiderstand oder Schutzwiderstand. Dadurch verändert sich während des Beschichtungsvorganges der Ist-Wert der Elektrodenhochspannung. Deshalb müßte dieser Ist-Wert der Elektrodenhochspannung während des Beschichtungsvorganges festgestellt und, falls erforderlich, eingestellt werden. Der Ist-Wert der Elektrodenhochspannung kann zwar gemessen werden, solange nicht sprühbeschichtet wird, dabei kann jedoch zwischen der Hochspannungselektrode und Erdpotential nur die Leerlaufspannung gemessen werden. Während des Sprühbeschichtungsbetriebes ist eine Messung der Elektrodenspannung zwischen Elektrode und Erdpotential nicht möglich wegen des aus der Sprühvorrichtung ausströmenden Beschichtungspulvers. Um wenigstens ein zur Elektrodenhochspannung korrespondierendes Signal zu messen, wäre es möglich, die Spannung auf der Primärseite oder der Sekundärseite des Transformators zu messen und mit dem Spannungsvervielfacherfaktor der Spannungsvervielfacherschaltung zu multiplizieren. Dies führt jedoch zu einem falschen Ergebnis wegen des sich im Betrieb in Abhängigkeit vom verbrauchenden Strom änderenden Spannungsabfall in der Spannungsvervielfacherschaltung. Bei Messung des Stromes auf der Primärseite statt auf der Sekundärseite des Transformators, müßte dessen Spannungstransformationsfaktor ebenfalls berücksichtigt werden und es kämen durch den Transformator bedingte Fehler hinzu.

Die Europäische Patentanmeldung Veröffentlichungs-Nr. EP-A 0 559 608 schlägt vor, den von dem zu beschichtenden Gegenstand zur Erde fließenden Strom zu messen und in Abhängigkeit hiervon den elektrischen Strom anzuzeigen und zur Steuerung des zur Erde fließenden Stromes zu verwenden. Dies löst jedoch nicht das eingangs genannte Problem, da eine solche Strommessung relativ kompliziert zu realisieren ist und keine Spannungsregelung vorliegender Erfindung ermöglicht.

Zur Vervollständigung wird hier noch darauf hingewiesen, daß Hochspannungserzeuger beispielsweise auch aus den US-A 3 764 883 und 4 196 465 bekannt sind. Ein anderes Kriterium für den Betrieb einer elektrostatischen Pulver-Sprühbeschichtungseinrichtung ist, daß die an der Hochspannungselektrode vorhandene Energie nicht zu groß werden darf, weil sonst die Gefahr von elektrischen Überschlägen auf Anlagenteile oder Personen sowie die Gefahr besteht, daß Beschichtungspulver zur Explosion gebracht wird.

Durch die Erfindung soll die Aufgabe gelöst werden, auch während des Sprühbeschichtungsbetriebes auf einfache Weise ein Meßergebnis zu gewinnen, welches zu jeder Zeit dem tatsächlichen Ist-Wert der Elektrodenhochspannung entspricht, selbst wenn sich der Elektrodenstrom und dadurch auch die Elektrodenhochspannung ändert. In weiterer Ausbildung soll durch die Erfindung auf einfache und genaue Weise angezeigt werden, wenn von der Hochspannungselektrode bereits so viel Strom über den zu beschichtenden Gegenstand fließt, daß durch eine weitere Spannungserhöhung eine zulässige, vorbestimmte Energiegrenze an der Hochspannungselektrode überschritten werden würde.

Der erste Teil der Aufgabe wird gemäß der Erfindung durch Anspruch 1 gelöst.

Weitere Merkmale der Erfindung sind in den Unteransprüchen enthalten und lösen zusätzlich den zweiten Teil der genannten Aufgabe.

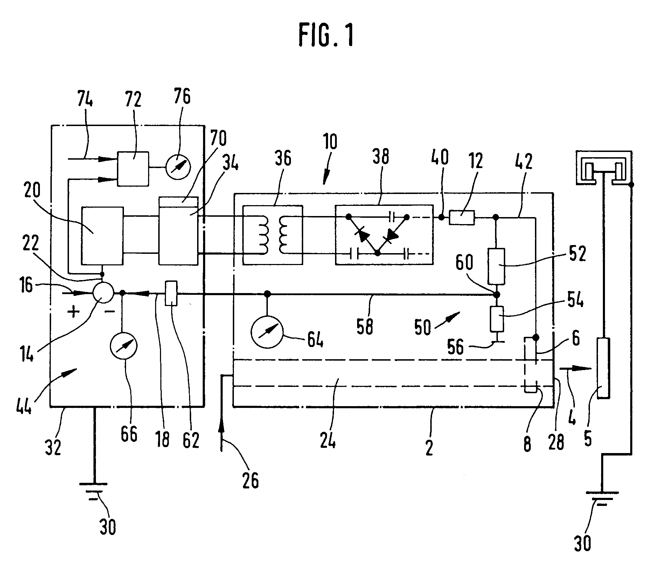

Die Erfindung wird im folgenden mit Bezug auf die beiliegende Zeichnung anhand einer bevorzugten Ausführungsform als Beispiel für Beschichtungspulver beschrieben, kann jedoch auch für Beschichtungs-Flüssigkeit verwendet werden, z.B. Lack. In der Zeichnung zeigt
- Fig. 1: schematisch eine elektrostatische Sprühbeschichtungseinrichtung nach der Erfindung.

Die in der Zeichnung dargestellte elektrostatische Sprühbeschichtungseinrichtung nach der Erfindung enthält eine schematisch dargestellte Sprühvorrichtung 2 zum elektrostatischen Sprühbeschichten eines dargestellten Gegenstandes 5 mit Pulver 4(oder Beschichtungsflüssigkeit), zwei (oder nur eine oder mehrere) Hochspannungselektroden 6 und 8, einen Hochspannungserzeuger 10 zur Erzeugung einer an die Hochspannungselektroden 6 und 8 über einen Strombegrenzungswiderstand oder Schutzwiderstand 12 angeschlossenen Gleichspannungs-Hochspannung, eine Differenzschaltung 14 zur Erzeugung eines Differenzwertsignales aus einem Sollwert 16 der Hochspannungselektroden 6 und 8 und einem Ist-Wert 18 der Hochspannung der Elektroden 6 und 8, sowie einen Regler 20, welcher aus einem Regeldifferenzsignal 22, welches als Differenzspannung von Sollwert 16 und Ist-Wert 18 dem Regler 20 zugeführt wird, die Hochspannung der Hochspannungselektroden 6 und 8 an dem Hochspannungserzeuger 10 regelt.

Die Sprühvorrichtung 2 ist nur schematisch dargestellt und enthält einen Pulver-Luft-Kanal 24, dessen stromaufwärtiges Ende an eine Pulverzufuhrleitung 26 angeschlossen ist und an dessen stromabwärtigem Ende 28 das Pulver 4 von den Hochspannungselektroden 6 und 8 elektrostatisch aufgeladen und auf den zu beschichtenden Gegenstand gesprüht wird. Die Hochspannungselektroden 6 und 8 können sich entsprechend der Zeichnung innerhalb des Pulver-Luft-Kanals 24 oder stromabwärts davon befinden. Sie sind derart angeordnet, daß das Beschichtungspulver 4 von ihnen elektrostatisch aufgeladen wird und zwischen ihnen und dem zu beschichtenden Gegenstand ein elektrostatisches Feld erzeugt wird. Der Gegenstand 5 ist über eine ihn tragende oder transportierende Vorrichtung 29 an Erdpotential 30 angeschlossen. Dadurch fließt ein elektrischer Strom von den Hochspannungselektroden 6 und 8 über den Luftzwischenraum zu dem mit Abstand von ihnen angeordneten Gegenstand 5, von ihm zu Erdpotential 30, und dann zurück zu einem extern von der Sprühvorrichtung 2 angeordneten Steuergerät oder Schaltschrank 32.

Der Hochspannungserzeuger 10 besteht aus einem im Schaltschrank 32 untergebrachten Oszillator 34, einem in der Sprühvorrichtung 2 untergebrachten Transformator 36 und einer ebenfalls in der Sprühvorrichtung 2 untergebrachten Spannungsvervielfacherschaltung 38. Die Primärseite des Transformators 36 ist an den Ausgang des Oszillators 34 angeschlossen. Die Sekundärseite des Transformators 36 ist an den Eingang der Spannungsvervielfacherschaltung 38 angeschlossen. Der Strombegrenzungswiderstand oder Schutzwiderstand 12 verbindet den Ausgang 40 der Spannungsvervielfacherschaltung 38 ist vorzugsweise eine Kaskadenschaltung über eine elektrische Hoch-spannungsleitung 42 mit den Hochspannungselektroden 6 und 8. Die Spannungsvervielfacherschaltung mit Gleich-richtern und Kondensatoren, wie sie z.B. aus den DE-C 34 02 945 und US-A 3 764 883 und 4 196 465 bekannt ist. Der Oszillator 34 kann entsprechend der dargestellten Ausführungsform im Schaltschrank 32 untergebracht und damit ein Teil der darin untergebrachten elektronischen Steuerschaltung 44 sein oder in der Sprühvorrichtung 2 untergebracht sein. Der Oszillator 34 kann ein selbstschwingender Oszillator sein oder zusammen mit dem Transformator 36 einen Oszillatorschwingkreis bilden.

In der Sprühvorrichtung 2 ist ein Spannungsteiler 50 untergebracht, welcher einen hochohmigen elektrischen Widerstand 52 und einen mit ihm in Reihe geschalteten, relativ zu ihm niederohmigen elektrischen Widerstand 54 aufweist. Das freie Ende des hochohmigen Widerstandes 52 ist zwischen dem Schutzwiderstand oder Strombegrenzungswiderstand 12 und den Elektroden 6 und 8 an die Hochspannungsleitung 42 elektrisch angeschlossen, könnte jedoch in anderer Ausführungsform statt dessen stromaufwärts des Schutzwiderstandes oder Strombegrenzungswiderstandes 12 an den Ausgang 40 der Spannungsvervielfacherschaltung 38 angeschlossen sein, da im einen Fall direkt die Hochspannung der Hochspannungselektroden 6 und 8 am hochohmigen Widerstand 52 ansteht, im anderen Falle eine dazu direkt proportionale Hochspannung. Das freie Ende des niederohmigen Widerstandes 54 ist an ein Geräte-Bezugspotential 56 elektrisch angeschlossen, könnte aber gemäß einer anderen Ausführungsform an Erdpotential angeschlossen sein. Eine Meßspannungsleitung 58 verbindet elektrisch einen Spannungsteilerknoten 60 zwischen den beiden Widerständen 52 und 54 des Spannungsteilers 50 mit der Differenzschaltung 14 und überträgt dadurch einen zur Hochspannung der Hochspannungselektroden 6 und 8 direkt proportionalen Hochspannungs-Ist-Wert 18 auf die Differenzschaltung 14. Die Meßspannungsleitung 58 kann einen Verstärker oder Signalumwandler 62 enthalten. An die Meßspannungsleitung 58 ist vorzugsweise ein Spannungsmeßgerät 64 und/oder 66 angeschlossen, welches den Ist-Wert der Hochspannung der Elektroden 6 und 8 anzeigt.

Aus Gründen des Personenschutzes und der Pulverstaub-Explosionsgefahr darf der Hochspannungserzeuger 10 eine bestimmte Energiegrenze oder Leistungsgrenze nicht überschreiten. Für die Einhaltung dieser Energiegrenze oder Leistungsgrenze ist im Schaltschrank 32 eine bekannte Energiebegrenzungsschaltung 70 angeordnet. Die Energiebegrenzungsschaltung 70 bewirkt dann, wenn die vom Hochspannungserzeuger 10 erzeugte Energie oder Leistung die genannte Grenze erreicht oder überschreitet, daß die Hochspannung für die Hochspannungselektroden 6 und 8 entsprechend dem ansteigenden Strom der Hochspannungselektroden 6 und 8 solange reduziert wird, bis die vorgeschriebene Energiegrenze oder Leistungsgrenze eingehalten wird. Die Leistung oder Energie des Hochspannungserzeugers 10 ergibt sich rechnerisch aus dem Produkt von Hochspannung der Hochspannungselektroden 6 und 8 mal Strom an den Hochspannungselektroden 6 und 8. Aus der Zeichnung ist ersichtlich, daß die von der Differenzschaltung 14 dem Regler 20 zugeführte Regeldifferenz oder Stellgröße 22 sich aus einer Subtraktion des Ist-Wertes 18 der Hochspannungselektroden 6 und 8 von dem Sollwert 16 für diese Hochspannung ergibt. Die Leistungsbegrenzungsschaltung 70 befindet sich im Oszillator 34. Wenn der elektrische Strom der Hochspannungselektroden 6 und 8 auf ein Maß ansteigt, wo die Leistungsbegrenzung einsetzt, dann wird die Hochspannung der Hochspannungselektroden 6 und 8 auf den noch zulässigen Wert reduziert. Da wir den Ist-Wert 18 der Hochspannungselektroden 6 und 8 erfassen, wird hiermit indirekt auch diese Hochspannungsreduktion erfaßt, und die Regeldifferenz 22, welche dem Regler 20 zugeführt wird, wird positiv. Der Regler 20 versucht jetzt die Hochspannung der Hochspannungselektroden 6 und 8 vergeblich zu erhöhen, da durch die Leistungbegrenzung der Leistungsbegrenzungsschaltung 70 wirkt und dadurch der Ist-Wert der Hochspannung an den Elektroden 6 und 8 unter den Soll-Wert abgesenkt wurde und darunter gehalten wird. Die Regeldifferenz 22 am Eingang des Regler 20 bleibt somit immer positiv, wenn der Hochspannungserzeuger 10 im Bereich der Leistungsbegrenzung arbeitet. Deshalb wird hier vorgeschlagen, eine Differenzschaltung 72 beispielsweise im Schaltschrank 32 unterzubringen, welche das Regeldifferenzslgnal oder den Stellwert 22 mit einem Vergleichssignal 74, vorzugsweise eine elektrische Vergleichsspannung, vergleicht und immer dann ein optisches, akustisches oder andersartiges Signal an einem Meßgerät 76 erzeugt, wenn die Regeldifferenz oder das Stellwertsignal, das vorzugsweise ebenfalls eine elektrische Spannung ist, größer ist als die Vergleichsspannung 74. Dies bedeutet, daß das Anzeigegerät 76 jeweils dann ein Signal zeigt, wenn der Hochspannungserzeuger 10 im Bereich der Leitungsbegrenzung arbeitet.

Gemäß nicht dargestellten abgewandelten Ausführungsformen können ein oder mehrere Teile oder alle Teile, welche im Schaltschrank 32 untergebracht sind, statt dessen in der Sprühvorrichtung 2 untergebracht werden. Andererseits wäre es möglich, den Transformator 36 und/oder die Spannungsvervielfacherschaltung 38 im Schaltschrank 32 statt in der Sprühvorrichtung 2 unterzubringen.

Die Vergleichsschaltung 72 ist vorzugsweise eine Differenzschaltung, welches die Differenzspannung zwischen der Stellgrößen-Spannung 22 minus der Vergleichsspannung 74 bildet.

Anstelle einer Differenzschaltung 14 zum Vergleich des Sollwertes 16 mit dem Ist-Wert 18 der Hochspannungselektroden 6 und 8 kann in abgewandelter Ausführungsform auch eine andere Vergleichsschaltung verwendet werden.

Die Gleichspannungs-Hochspannung an den Elektroden 6, 8 liegt vorzugsweise im Bereich zwischen 4 KV und 140 KV.

Die Erfindung hat den Vorteil, daß sie nicht nur im Leerlauf (elektrische Spannung eingeschaltet, aber kein Sprühen von Beschichtungsmaterial), sondern auch beim Sprühbetrieb eine elektrische Meßspannung erzeugt, welche identisch oder direkt proportional zur tatsächlichen Hochspannung an den Hochspannungselektroden 6 und 8 ist.

Im folgenden werden vorzugsweise Betriebswerte angegeben. Der Transformator 36 hat auf seiner an den Oszillator 34 angeschlossenen Primärseite eine einstellbare Effektivspannung im Bereich zwischen Null und 60 Volt, auf seiner Sekundärseite eine einstellbare Effektivspannung im Bereich zwischen Null und 20 Kilovolt, und eine Frequenz im Bereich zwischen 4 Kilovolt und 140 Kilovolt. Die Gleichspannungs-Hochspannung an der Elektrode 6 bzw. 8 liegt vorzugsweise im Bereich zwischen 10 Kilovolt und 150 Kilovolt und ist vorzugsweise ebenfalls einstellbar.

## Patentansprüche

1. Elektrostatische Sprühbeschichtungseinrichtung, insbesondere für Beschichtungspulver, mit mindestens einer Sprühvorrichtung zum Sprühen von Beschichtungsmaterial auf einen zu beschichtenden Gegenstand; mit mindestens einer von der Sprühvorrichtung getragenen Hochspannungselektrode zum elektrostatischen Aufladen des Beschichtungsmaterials; mit einem Hochspannungserzeuger (10), welcher eine Spannungsvervielfacherschaltung (38) enthält, die in der Sprühvorrichtung (2) untergebracht ist und aus einer relativ niedrigen Wechselspannung eine relativ hohe Gleichspannungs-Hochspannung für die Hochspannungselektrode (6, 8) erzeugt;
**dadurch gekennzeichnet,** daß
in der Sprühvorrichtung (2) eine Meßwiderstandsschaltung (50) vorgesehen ist, die an eine elektrische Verbindungsstelle (40 oder 42) zwischen der spannungsvervielfacherschaltung (38) und der mindestens einen Hochspannungselektrode (6, 8) angeschlossen ist und eine Meßspannung (18) im Leerlauf und während des Sprühbetriebes erzeugt, welche im Leerlauf und während des Sprühbetriebes direkt proportional kleiner ist als die Hochspannung an der mindestens einen Hochspannungselektrode (6, 8) und dadurch den tatsächlichen Ist-Wert der Hochspannung an der mindestens einen Elektrode (6, 8) repräsentiert; daß die Meßspannung durch die Sprühvorrichtung (2) hindurch an eine Meßspannungs-Verwertungsschaltung (44 und/oder 66 und/oder 44) angeschlossen ist, welche innerhalb der Sprühvorrichtung (2) oder extern von ihr angeordnet ist.

2. Elektrostatische Sprühbeschichtungseinrichtung nach Anspruch 1,
**dadurch gekennzeichnet,** daß
die Meßspannungs-Verwertungsschaltung mindestens ein Spannungsmeßgerät (64 und/oder 66) aufweist, welches in Abhängigkeit von der Meßspannung (18) den Ist-Wert der Hochspannung der Hochspannungselektrode (6, 8) anzeigt.

3. Elektrostatische Sprühbeschichtungseinrichtung nach Anspruch 1 oder 2,
**dadurch gekennzeichnet,** daß
die Meßspannungs-Verwertungsschaltung eine Sollwert-Istwert-Vergleichsschaltung, vorzugsweise eine Differenzschaltung (14), und einen Regler (20) aufweist, daß die Sollwert-Istwert-Vergleichsschaltung (14) einen Sollwert der Elektrodenhochspannung und einen Istwert der Elektrodenhochspannung miteinander vergleicht, vorzugsweise den Istwert vom Sollwert subtrahiert, und in Abhängigkeit vom Vergleichsergebnis eine Stellgrößenspannung dem Regler (20) liefert, welcher in Abhängigkeit von der Stellgrößenspannung (22) die an der Elektrode (6, 8) herrschende Hochspannung an dem Hochspannungserzeuger (10) regelt.

4. Elektrostatische Sprühbeschichtungseinrichtung nach Anspruch 3,
**dadurch gekennzeichnet,** daß
die Meßspannungsverwertungsschaltung (44) eine Leistungsbegrenzungsschaltung (70) aufweist, welche die von dem Hochspannungserzeuger (10) erzeugte Leistung oder Energie bei Erreichen eines vorbestimmten Leistungs- oder Energiegrenzwertes dadurch an einem weiteren Anstieg hindert, daß sie entsprechend einem steigenden elektrischen Strom an der Hochspannungselektrode (6, 8) die Hochspannung dieser Hochspannungselektrode entsprechend reduziert, wobei die Energie oder Leistung dem Produkt aus Strom mal Spannung an der Hochspannungselektrode (6, 8) ist, und daß eine Energiebegrenzungs-Vergleichsschaltung (72) vorgesehen ist, welche die Stellgrößenspannung (22) des Reglers (20) mit einer Vergleichsspannung (74) vergleicht und jeweils dann ein Leistungsbegrenzungs-Indikationssignal (bei 76) erzeugt, wenn das Vergleichsergebnis von einem vorbestimmten Vergleichsbereich abweicht.

5. Elektrostatische Sprühbeschichtungseinrichtung nach Anspruch 4,
**dadurch gekennzeichnet,** daß
die Leistungs-Vergleichsschaltung (72) eine Differenzschaltung ist, welche die Vergleichsspannung (74) von der Stellgrößenspannung (22) des Reglers (20) abzieht und jeweils dann das Leistungsbegrenzungs-Indikationssignal (bei 76) erzeugt, wenn die Stellgrößenspannung (22) größer ist als die Vergleichsspannung (74).
